# FASCICULE DE BREVET EUROPEEN

(11) **EP 2 386 622 B1**
(45) Date de publication et mention de la délivrance du brevet: **30.03.2016**
(21) Numéro de dépôt: 11447010.7
(22) Date de dépôt: 05.05.2011
(51) Int. Cl.: C10L 5/36, C10L 5/44

(54) **BUCHE DESTINÉE À PRODUIRE DE LA CHALEUR ET DE L'ÉCLAIRAGE**
HOLZSCHEIT ZUR WÄRME- UND BELEUCHTUNGSERZEUGUNG
LOG INTENDED FOR PRODUCING HEAT AND LIGHT

(30) Priorité: 12.05.2010 BE 201000289
(43) Date de publication de la demande: 16.11.2011
(73) Titulaire: Pepinieres Poncin S.A., 6880 Jehonville (Bertrix) (BE)
(72) Inventeur: Poncin, Didier, 6880 Jehonville (Bertrix) (BE)
(74) Mandataire: Lecomte & Partners

(56) Documents cités:
- EP-A1- 2 060 618
- CA-A1- 2 676 896
- CH-A5- 695 496
- CH-A5- 697 091
- DE-U1- 20 001 115
- US-A1- 2007 169 409
- US-A1- 2009 107 036
- US-A1- 2009 307 968
- Anonyme: "La bûche d'ambiance des Pépinières Poncin", Dossier de Presse INNOVATECH , 28 October 2010 (2010-10-28), XP002613552, Retrieved from the Internet: URL:http://www.innovons.be/webdav/site/inn ovons/shared/PONCIN%20dp.pdf [retrieved on 2010-12-08]
- Anonymous: "Birch Candles - Pillar Candle at Crate & Barrel - a genuine birch bark", Trendir , 2 December 2006 (2006-12-02), XP002613553, Retrieved from the Internet: URL:http://www.trendir.com/archives/000803 .html [retrieved on 2010-12-09] & Anonymous: "Birch Log Tea Lite Candle Holder Sets", ArtFire, 1 April 2010 (2010-04-01), XP002615046, Retrieved from the Internet: URL:http://www.artfire.com/modules.php?nam e=Shop&op=listing&product_id=779425> [retrieved on 2010-12-09]

## Description

La présente invention se rapporte, d'une manière générale, à une bûche de bois destinée à produire de la chaleur et de l'éclairage.

Plus précisément, l'invention concerne une bûche de bois, destinée à produire de la chaleur et de l'éclairage, du genre comprenant :
- une face supérieure transversale, une face inférieure transversale et une face latérale,
- un évidement qui s'étend depuis la face supérieure transversale en direction de la face inférieure transversale tout en n'atteignant pas celle-ci lequel contient un initiateur de combustion de cette bûche, cet initiateur de combustion ayant une hauteur inférieure ou égale à la hauteur de l'évidement, et
- un moyen à effet de cheminée.

Lors de réunions, cérémonies ou autres rencontres tenues en plein air, il est fréquent de faire appel à divers accessoires capables de participer à la création d'une atmosphère de convivialité. A cet effet, des éléments décoratifs où fonctionnels peuvent être mis en place notamment des éléments d'éclairage et de chauffage tels que des bûches de bois dont la combustion sera utilisée pour créer cette ambiance.

Parmi les accessoires répondant à ces critères, on peut retenir la bûche en bois connue sous la dénomination « bûche suédoise » publiée sur lé site Internet http:/%www.ehow.com/how 5044912 make-swedish-log-candle.html. Cette bûche fait traditionnellement appel, pour sa fabrication, à un rondin de bois fendu de quatre entailles réalisées à partir de sa face transversale supérieure c'est-à-dire la face opposée à la face reposant sur un support. La combustion d'une telle bûche est initiée par l'ajout de matières incandescentes disposées sur la face supérieure en question. Outre une rapidité de combustion souvent désavantageuse, cette bûche comporte d'autres inconvénients parmi lesquels la production d'une quantité importante de fumées souvent accompagnées de projections incandescentes.

Un autre mode de réalisation d'une bûche de chauffage et d'éclairage a été rapporté sur le site Internet http://www.hohcandles.com/product.asp?product=333. Cette bûche est caractérisée par un évidement, réalisé à partir de sa face transversale supérieure, lequel sert de logement à un initiateur de combustion en l'occurrence une chandelle munie d'une mèche longue et fine qui dépasse largement cette face supérieure. En outre, cette bûche comporte six rainures qui se déploient transversalement depuis sa face latérale jusqu'à l'évidement et longitudinalement à partir de la face supérieure en question en direction de la face inférieure opposée sans toutefois dépasser le niveau de combustion de la chandelle.

Dans le cadre de la présente invention, on a réalisé des essais préliminaires de combustion d'une bûche identique à celle présentée sur le site Internet rapporté précédemment c'est-à-dire une bûche pourvue notamment d'une chandelle munie d'une mèche et dotée de six rainures.

Les résultats obtenus montrent qu'une bûche de ce type présente plusieurs inconvénients lors de sa mise en oeuvre se traduisant notamment par un début de combustion du bois à la fois lent, puisque celle-ci n'intervient qu'une demi-heure environ après l'allumage de la mèche et difficile car le moindre souffle de vent éteint généralement celle-ci. De surcroît, les rainures ne semblent promises qu'à un rôle purement décoratif car manifestement non adaptées puisque trop courtes pour assurer un tirage significatif lors de la combustion de la bûche. En outre, une bûche de ce type n'est pas sans présenter un certain danger car de la matière en fusion issue de la chandelle, matière en fusion produite sous l'effet de la chaleur dégagée par la combustion du bois, s'accumule dans le fond de l'évidement.

D'autres essais ont été entrepris après modification de cette bûche par allongement des rainures latérales vers la face opposée à sa face supérieure et allongement proportionnel de l'évidement vers cette même face opposée toutefois en évitant que l'extrémité distale des rainures, c'est-à-dire l'extrémité la plus éloignée de la face supérieure en question, ne dépasse le niveau ou surface de combustion de la chandelle.

Ces essais ont montré qu'une bûche de chauffage et d'éclairage ainsi conçue provoque la formation de fumées importantes. D'autre part, une telle bûche s'avère également dangereuse par suite de l'accumulation, dans le fond de l'évidement, d'une matière en fusion provenant de la chandelle suite à la combustion de celle-ci et du bois de la bûche. Par ailleurs, cette bûche ne se consume pas uniformément et laisse certains éclats de bois se détacher et tomber sur le support où elle est posée.

De surcroît, l'ensemble des tests effectués a montré qu'une bûche comportant des fentes naturelles laisse s'échapper, par celles-ci, de la matière constitutive de la chandelle c'est-à-dire de la matière qui se sera liquéfiée suite à la combustion conjointe du bois et de cette chandelle.

On a également rapporté, dans la demande de brevet. CA 2676896, une bûche qui comporte, issue de sa face supérieure, une cheminée centrale ne débouchant pas à sa face inférieure. En outre, cette bûche présente au moins un conduit supplémentaire d'amenée d'air ainsi qu'un initiateur de combustion qui peut être déposé directement dans cette cheminée c'est-à-dire sans nécessité de l'insérer dans une buse ou enveloppe solidaire d'un support.

De même, on a divulgué dans le modèle d'utilité 20001115U1 une bûche qui comporte, provenant de sa face supérieure, un évidement qui s'étend vers sa face inférieure sans l'atteindre. Cette bûche comprend également des fentes issues de cette face inférieure lesquelles rejoignent l'évidement de manière à fournir de l'air à une combustion. Ces fentes se situent sous la surface de combustion d'un initiateur de combustion tandis qu'à partir de celles-ci des encoches sont pratiquées jusqu'à la face supérieure de cette bûche.

Toutefois, au niveau de l'initiateur de combustion prévu dans les modes de réalisation des bûches rapportées précédemment, aucune enveloppe de protection n'est envisagée de manière à prévenir un écoulement de matière liquéfiée. Le document de brevet publié CH695496A5 divulgue un allume-feu en bois conforme au préambule de la revendication 1. Le document de brevet publié DE20001115U divulgue une bûche d'ambiance avec un noyau en bois dur et de initiateurs de combustion en bas du noyau.

On a cependant décrit, dans la demande de brevet US2007/0169409, un initiateur de combustion, en fait une torche, enveloppée dans une feuille de papier et reliée à un manche.

Lorsque cette torche, composée de cire ou de paraffine, est allumée la face opposée à celle qui se

Le document de brevet publié CH695496A5 divulgue un allume-feu en bois conforme au préambule de la revendication 1. Le document de brevet publié trouve dans un éventuel déplacement d'air sera soumise à l'interaction thermique de la flamme, ce qui va provoquer une fissuration due à une carbonisation qui se forme sur l'enveloppe. Dans ce cas, la cire ou paraffine intérieure à la torche va rapidement fondre et couler à l'extérieur de la fissuration formant ainsi des gouttes à la surface extérieure de cette torche.

En conséquence, la feuille de papier enveloppant la torche en question s'avère, dans cette réalisation, incapable d'empêcher l'écoulement des gouttes de cire ou paraffine formées sous l'effet de la chaleur et de la fissuration de cette enveloppe.

Or, il a été trouvé de manière surprenante, dans le cadre de la présente invention, qu'une enveloppe de protection, constituée d'un matériau non ignifugé ou combustible, est capable, lorsqu'elle entoure l'initiateur de combustion d'une bûche du genre mentionné précédemment, de prévenir l'écoulement, à l'extérieur d'elle-même, de la matière constitutive de cet initiateur ou de la matière qui, solide ou semi solide au départ, se liquéfie sous l'effet dé la chaleur dégagée par la combustion.

En conséquence, la présente invention a pour but de proposer une bûche de bois, du genre indiqué précédemment, capable notamment de pallier les inconvénients précités en ce qu'elle permet d'initier un début rapide de combustion du bois, d'entretenir un tirage ou effet de cheminée d'excellente qualité, d'assurer une meilleure sécurité pour l'environnement et de ne produire ni fumées importantes ni projections de matières incandescentes.

Pour atteindre ce but, une bûche selon la revendication 1 est proposée.

L'initiateur de combustion en question, également dénommé par le seul terme « initiateur » dans le contexte de la présente invention, se présente habituellement sous la forme d'une masse de matière combustible solide, semi solide ou même liquide.

Lorsqu'elle est sous forme solide, cette masse de matière adopte généralement la configuration d'un bloc rigide qui présente une face supérieure en regard de la face supérieure transversale de la bûche, une base reposant sur la base de l'évidement et une ou plusieurs faces latérales en regard de la ou des faces latérales de cet évidement. La forme extérieure de cette masse de natière peut être régulière ou non par exemple cylindrique, conique, tronconique ou parallélépipédique.

Dans ce mode de réalisation, l'initiateur est habituellement constitué de paraffine ou comprend de la paraffine. Cependant, toute autre matière solide analogue ou pas à la paraffine, tel qu'un substitut de paraffine, et ne dégageant pas de fumées toxiques lors de sa combustion peut être envisagée.

Lorsqu'elle est sous forme semi solide, la masse de matière en question se présente, en particulier, sous l'aspect d'un gel par exemple un gel de méthanol ou d'éthanol tandis que sous forme liquide, cette masse de matière correspond par exemple à une masse d'un liquide organique combustible par exemple le méthanol, l'éthanol ou une huile.

D'ordinaire, la combustion de la bûche se produit sur une distance équivalant sensiblement à la hauteur de cette masse d'initiateur de combustion.

De manière à pouvoir provoquer sa propre combustion, la masse d'initiateur est de préférence munie d'une mèche d'allumage, par exemple en coton. Cette mèche, qui traverse habituellement cette masse d'initiateur sur toute sa hauteur, aura une largeur suffisamment importante pour provoquer un début de combustion rapide de la bûche et pour résister au vent après son allumage. A cet effet, la largeur de cette mèche équivaudra généralement à 10% à 20% de la largeur de la masse d'initiateur. Toutefois, sa hauteur, à l'extérieur de l'initiateur, sera relativement faible à la fois pour initier une combustion rapide de celui-ci, et corollairement de la bûche, et pour éviter un maximum de prise au vent qui pourrait provoquer son extinction. Pour ces raisons et selon une autre caractéristique de l'invention, l'extrémité de la mèche d'allumage, à l'extérieur de l'initiateur, se situe sous le niveau de la face supérieure transversale de la bûche ou sensiblement à ce niveau.

A titre d'exemple et selon un mode de réalisation préféré de l'invention, l'initiateur de combustion correspond habituellement à une portion d'une chandelle munie d'une mèche ou d'une torche munie d'une mèche.

L'enveloppe de protection a essentiellement pour fonction d'empêcher l'écoulement de tout ou partie de la masse de matière qui constitue l'initiateur de combustion, écoulement qui peut survenir par les rainures pratiquées et par les fentes naturelles éventuellement présentes dans le bois de la bûche.

Pour cette raison, cette enveloppe de protection est constituée d'un matériau non ignifuge capable de créer une barrière pour le confinement de l'ensemble de la matière formant cette masse d'initiateur. Cette matière à retenir est soit de la matière combustible qui, étant solide avant sa combustion, se liquéfie sous l'effet de la chaleur dégagée par cette combustion et par celle du bois de la bûche, soit de la matière combustible dont la consistance est insuffisante pour constituer un bloc rigide, soit de la matière combustible qui se présente sous une forme totalement liquide.

D'ordinaire, l'enveloppe de protection épouse étroitement les contours extérieurs de la masse de matière combustible de l'initiateur, un orifice étant prévu pour le passage d'une mèche ou le simple passage d'une flamme lors de la combustion de cette matière. Une enveloppe de ce type est habituellement réservée à une masse liquide ou semi solide d'initiateur de combustion et correspond, en particulier, à un récipient muni d'un couvercle permettant un accès aisé à son contenu.

Cependant, lorsque la masse d'initiateur de combustion se présente sous forme solide ou même semi solide, la face supérieure de cette masse peut être dépourvue de protection. Dans ce cas, l'enveloppe de protection recouvre uniquement la ou les faces latérales de la masse d'initiateur ainsi que sa base. Toutefois, dans le cas particulier où cet initiateur est sous une forme solide suffisamment rigide, l'enveloppe de protection peut être limitée à une portion d'enveloppe recouvrant uniquement la ou les faces latérales de cette masse d'initiateur. Tel peut être le cas, par exemple, d'une chandelle cylindrique munie d'une mèche d'allumage dont l'enveloppe de protection se limite à une feuille recouvrant étroitement la face latérale de cette chandelle.

Habituellement, l'enveloppe de protection est réalisée au départ d'un matériau apte à épouser intimement les contours de la masse d'initiateur. Comme il est amené à devoir se consumer, le matériau de l'enveloppe sera choisi parmi des matériaux ne dégageant pas de fumée toxique pour l'environnement. A titre d'exemple, l'enveloppe de protection peut être réalisée à partir d'une feuille d'un matériau combustible, rigide ou non, par exemple une feuille de papier éventuellement paraffiné tel que du papier kraft ou une feuille de carton éventuellement paraffiné.

En tout état de cause, on préfère utiliser un matériau dont la combustion sera mise à profit pour assurer et entretenir une combustion constante et régulière de la bûche.

Toutefois, lorsque l'initiateur de combustion se présente sous forme d'une masse inconsistante telle qu'un gel ou sous forme d'un liquide tel qu'une huile, l'enveloppe de protection, dont une des fonctions essentielles est d'assurer le confinement de cette masse, sera réalisée en un matériau rigide et de préférence imperméable à la matière de l'initiateur.

Pour des raisons notamment de facilité de réalisation et de commodité de mise en oeuvre, on préfère généralement utiliser, selon l'invention, un initiateur protégé formé d'une portion d'une chandelle munie d'une mèche ou d'une torche munie d'une mèche, cette portion étant enveloppée dans une feuille de papier éventuellement paraffiné ou une feuille de carton éventuellement paraffiné.

L'initiateur de combustion muni de son enveloppe de protection est logé dans un évidement pratiqué à partir de la face supérieure de la bûche. En général, cet évidement épouse intimement la forme de l'enveloppe qui elle-même est de forme analogue à celle de l'initiateur. Par conséquent, cet évidement peut présenter une forme régulière ou non par exemple cylindrique, conique, tronconique ou parallélépipédique. Généralement, la largeur de l'ensemble formé par l'initiateur de combustion muni de son enveloppe de protection équivaut sensiblement à la largeur de l'évidement.

Toutefois, selon un mode de réalisation préféré de l'invention, la largeur maximale de l'ensemble formé par l'initiateur de combustion et son enveloppe de protection est inférieure à la largeur minimale de l'évidement. Avantageusement, le vide ainsi formé associé au vide laissé par le moyen à effet de cheminée, à savoir les rainures longitudinales, est mis à profit pour influencer favorablement le tirage ou effet de cheminée lors de la combustion de l'initiateur.

Ces rainures sont réalisées à partir de la face supérieure de la bûche en direction de la face inférieure et s'étendent sous le niveau de combustion de l'initiateur en sorte que leur extrémité distale, c'est-à-dire l'extrémité la plus éloignée de cette face supérieure, se situe généralement jusqu'à une distance maximale équivalant à la hauteur de l'évidement, de préférence à une distance située sensiblement entre la moitié et les trois quarts de cette hauteur.

D'ordinaire, le nombre de rainures est déterminé en fonction de la largeur de la bûche et de la puissance de tirage souhaitée. Plus cette largeur est importante et plus grand sera le nombre de rainures à prévoir de manière à produire un tirage suffisant pour assurer une bonne combustion de la bûche sans pour autant provoquer une combustion trop rapide de celle-ci. Pour cette raison, on envisage généralement jusqu'à 8 rainures par exemple 4, 6 ou 8 rainures.

Selon un autre mode de réalisation de l'invention, le moyen à effet de cheminée représenté par des rainures peut être complété par des orifices pratiqués transversalement à partir de la face latérale de la bûche jusqu'à l'évidement.

Ces orifices seront réalisés sous la surface de combustion de l'initiateur essentiellement entre cette surface et la base de l'évidement et leur nombre variera en fonction de la présence de rainures et de la qualité du tirage souhaité.

Avantageusement, l'enveloppe de protection pourra également prévenir l'écoulement, par ces orifices, de tout ou partie de la masse de matière qui constitue l'initiateur de combustion.

Selon une variante de l'invention, la face supérieure de la bûche, habituellement plane, peut présenter une configuration globalement concave qui peut également participer à une amélioration du tirage.

De manière à assurer sa préhension et son transport faciles, la bûche selon l'invention peut être munie d'une anse par exemple une chaînette ou un cordon dont les deux extrémités sont fixées à cette bûche de manière quelconque, par exemple par agrafage, et ce, de préférence en des points diamétralement opposés de sa face latérale.

Habituellement, la bûche selon l'invention provient d'arbres de type feuillu ou résineux. On préfère toutefois une bûche réalisée à partir d'un arbre feuillu tel que le bouleau qui présente un aspect décoratif plus intéressant qu'un arbre résineux lequel a davantage tendance à se fendre ou se fendiller lorsqu'il est sec.

L'invention sera mieux comprise et d'autres buts, caractéristiques et avantages apparaîtront plus clairement à la lumière de la description explicative ci-après faite en référence aux dessins annexés donnés uniquement à titre d'exemple non limitatif illustrant un mode de réalisation de l'invention et dans lequel :
* la figure 1 est une représentation d'une vue frontale d'une bûche selon l'invention,
* la figure 2 est une représentation d'une vue du dessus de la bûche à la figure 1.

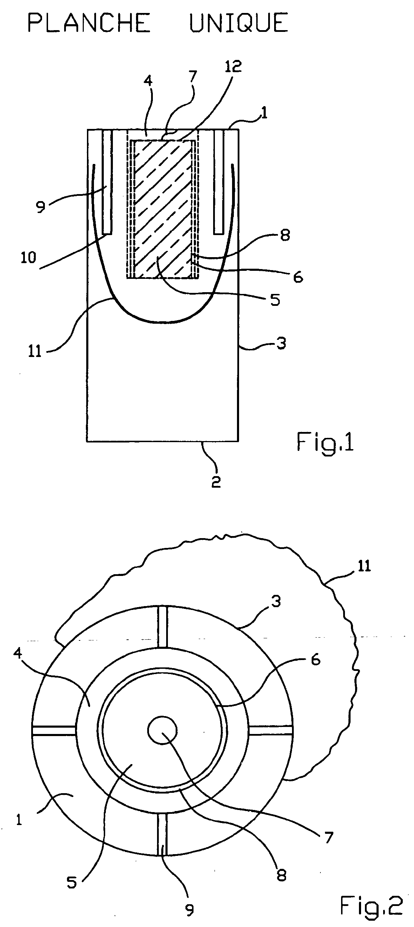

Telle que représentée à la figure 1, la bûche selon l'invention comprend un rondin de bois, préférentiellement de bouleau, d'une hauteur par exemple de 20 à 25 cm et d'un diamètre par exemple de 4 à 18 cm lequel présente une face 1 supérieure, une face 2 inférieure, destinée à être posée sur un support, et une face 3 latérale. Un évidement 4 sensiblement cylindrique, d'un diamètre variant par exemple de 4 à 15 cm et d'une hauteur par exemple de 15 à 20 cm, est pratiqué à partir de la face 1. On remarque, en outre, que cet évidement loge une chandelle 5 cylindrique dont la paroi 6 latérale est sensiblement parallèle à la face latérale de l'évidement. Cette chandelle, qui est formée d'un bloc de matière combustible comprenant de la paraffine, est munie d'une courte et épaisse mèche 7 d'allumage, par exemple d'une hauteur variant de 0,5 à 2 cm, ne dépassant pas la face 1 supérieure du rondin. Par conséquent, le niveau de combustion de la chandelle 5 avant le début de cette combustion se situe à proximité immédiate de la face 1 supérieure. En outre, cette chandelle est dotée, sur sa face 6 latérale, d'une enveloppe 8 de protection. Cette enveloppe, qui épouse intimement le contour de la chandelle, est constituée d'une feuille de papier, éventuellement paraffiné, genre papier kraft. D'autre part, on observe, aux figures 1 et 2, que le diamètre de l'ensemble formé par la chandelle et son enveloppe de protection apparaît inférieur au diamètre de l'évidement laissant ainsi subsister un vide entre cette enveloppe de protection et la paroi de l'évidement. Les figures 1 et 2 montrent également la présence de rainures 9 dont la largeur peut varier notamment entre 0,1 et 0,9 cm. La longueur de ces rainures peut, quant à elle, varier entre par exemple 1 cm et la hauteur de l'évidement en sorte que leur extrémité distale 10 se situe, par exemple, environ aux trois quarts de cette hauteur à partir de la face 1. D'autre part, on distingue également aux figures 1 et 2 la présence d'une anse 11 fixée à la paroi latérale 3 laquelle facilite le transport du rondin muni ou non de la chandelle 5.

Après la lecture de ce qui précède, on comprend que l'allumage de la mèche 7 va provoquer la combustion lente de la chandelle 5 qui elle-même va engendrer la combustion du rondin en bois au départ de sa face supérieure. Cette combustion de la bûche est entretenue et régulée par l'effet cheminée produit conjointement par les rainures 9 et le vide subsistant dans l'évidement entre la paroi de celui-ci et l'enveloppe 8 de protection de la chandelle 5. Dès le début de la combustion de la chandelle, une portion de sa matière située au niveau 12 de combustion va se liquéfier sous l'effet de la chaleur dégagée. Toutefois, cette matière liquéfiée sera retenue par l'enveloppe de protection bien que celle-ci soit élaborée en une matière combustible comme le papier ou le carton. En effet, ce papier ou ce carton de protection n'a pas tendance à brûler franchement mais à se consumer insensiblement tout en retenant la matière liquéfiée provenant de la chandelle évitant ainsi la coulée de cette matière par les rainures 9 ou par des fentes éventuellement présentes dans le bois.

La bûche selon l'invention s'est révélée particulièrement intéressante et performante puisque sa combustion permet un chauffage et un éclairage durant au moins 2h30 min. Cependant, cette durée arbitraire peut être modifiée à souhait en faisant varier quelque peu le moyen à effet de cheminée par exemple la longueur et la largeur des rainures, les dimensions des orifices, le nombre de ces rainures et orifices ainsi que le volume de l'évidement par rapport au volume de l'initiateur de combustion. Par ailleurs, la conception de cette bûche selon l'invention permet, par le biais d'une enveloppe combustible entourant l'initiateur, d'éviter que la matière en fusion produite lors de la combustion conjointe de l'initiateur et du bois ne s'échappe par les rainures et orifices réalisés et éventuellement par les fentes naturelles de ce bois. Un tel mode de réalisation participe, en conséquence, à une sécurité accrue pour l'environnement. D'autre part, cette enveloppe protectrice se consumant en même temps que l'initiateur, aucun déchet non combustible ne subsistera après la combustion de la bûche. En outre la rapidité d'un début de combustion du bois pourra également être modulée selon la grosseur et la longueur de la mèche : plus large sera cette mèche par rapport à la largeur du bloc d'initiateur et plus rapide surviendra le début de la combustion du bois. Par ailleurs, une mèche d'une telle configuration résiste particulièrement bien au vent dès son allumage. Au surplus, l'initiateur de combustion pouvant être choisi parmi des substances ou des mélanges de substances, telles que la paraffine, qui se consument lentement et régulièrement induit parallèlement une combustion régulière du bois de la bûche. En outre, cette combustion de l'initiateur et du bois ne s'accompagne pas d'une production excessive de fumées.

## Revendications

1. Bûche de bois destinée à produire de la chaleur et de l'éclairage, du genre comprenant :
- une face (1) supérieure transversale, une face (2) inférieure transversale et une face (3) latérale,
- un évidement (4) qui s'étend depuis la face supérieure transversale en direction de la face inférieure transversale tout en n'atteignant pas celle-ci, lequel contient un initiateur (5) de combustion de cette bûche, cet initiateur de combustion ayant une hauteur inférieure ou égale à la hauteur de l'évidement, et
- un moyen à effet de cheminée ; où
le moyen à effet de cheminée comprend des rainures qui, depuis la face supérieure transversale, s'étendent en direction de la face inférieure transversale sous la surface de combustion de l'initiateur de combustion et depuis la face latérale jusqu'à l'évidement ; et
**caractérisée en ce que** l'initiateur de combustion est entouré totalement ou partiellement d'une enveloppe de protection qui est constituée d'un matériau non ignifuge et qui est apte à prévenir l'écoulement, à l'extérieur de la bûche, de la matière non solide constituant cet initiateur ou de la matière non solide qui en est issue suite à la combustion.

2. Bûche selon la revendication 1, **caractérisée en ce que** l'initiateur de combustion est sous forme d'une masse de matière solide, semi solide ou liquide.

3. Bûche selon la revendication 1 ou 2, **caractérisée en ce que** l'initiateur de combustion est constitué de paraffine ou comprend de la paraffine.

4. Bûche selon l'une des revendications 1 à 3, **caractérisée en ce que** l'extrémité distale (10) des rainures se situe jusqu'à une distance maximale équivalant à la hauteur de l'évidement.

5. Bûche selon l'une des revendications 1 à 4, **caractérisée en ce qu'**elle comporte jusqu'à 8 rainures.

6. Bûche selon l'une des revendications 1 à 5, **caractérisée en ce que** la largeur maximale de l'ensemble formé par l'initiateur de combustion et son enveloppe de protection est inférieure à la largeur minimale de l'évidement.

7. Bûche selon l'une des revendications 1 à 6, **caractérisée en ce que** l'initiateur de combustion est pourvu d'une mèche (7) d'allumage.

8. Bûche selon la revendication 7, **caractérisée en ce que** l'extrémité de la mèche d'allumage, à l'extérieur de l'initiateur, se situe sous le niveau de la face (1) supérieure transversale de la bûche ou sensiblement à ce niveau.

9. Bûche selon la revendication 7 ou 8, **caractérisée en ce que** la largeur de la mèche équivaut à 10% à 20% de la largeur de la masse d'initiateur de combustion.

10. Bûche selon l'une des revendications 1 à 9, **caractérisée en ce que** la face supérieure présente une configuration globalement concave.

11. Bûche selon l'une des revendications 1 à 10, **caractérisée en ce que** le moyen à effet de cheminée comprend des orifices situés sous le niveau de combustion.

12. Bûche selon la revendication 11, **caractérisée en ce que** l'enveloppe de protection est réalisée à partir d'une feuille d'un matériau rigide ou non.

13. Bûche selon la revendication 12, **caractérisée en ce que** l'enveloppe de protection est constituée d'une feuille de papier éventuellement paraffiné ou d'une feuille de carton éventuellement paraffiné.

14. Bûche selon l'une des revendications 1 à 13, **caractérisée en ce qu'**elle est munie d'une anse (11) apte à assurer sa préhension et son transport.

15. Bûche selon l'une de revendications 1 à 14, **caractérisée en ce que** le bois provient d'arbres de type feuillu ou résineux.

## Patentansprüche

1. Holzscheit, das für die Erzeugung von Wärme und Beleuchtung bestimmt ist, von der Art mit:
- einer querliegenden oberen Fläche (1), einer querliegenden unteren Fläche (2) und einer seitlichen Fläche (3),
- einer Aushöhlung (4), die sich von der querliegenden oberen Fläche in Richtung der querliegenden unteren Fläche erstreckt, ohne diese jedoch zu erreichen, welche Aushöhlung einen Initialzünder (5) enthält, der eine Höhe besitzt, die der Höhe der Aushöhlung entspricht oder kleiner ist, und
- einem Mittel mit Kamineffekt; wobei
das Mittel mit Kamineffekt Rillen beinhaltet, die sich ausgehend von der oberen querliegenden Fläche in Richtung zu unteren querliegenden Fläche unter der Brandoberfläche des Initialzünders und ab der seitlichen Fläche bis zur Aushöhlung erstrecken; und
**dadurch gekennzeichnet, dass** der Initialzünder vollständig oder teilweise mit einer Schutzhülle umgeben ist, die aus einem nicht feuerfesten Material besteht und geeignet ist, das Abfließen des nicht festen Materials, aus dem dieser Initialzünder besteht, oder des nicht festen Materials, das aus dieser Verbrennung hervorgeht, nach außerhalb des Holzscheites zu verhüten.

2. Holzscheit nach Anspruch 1, **dadurch gekennzeichnet, dass** der Initialzünder die Form einer Masse aus festem, halbfestem oder flüssigem Material besitzt.

3. Holzscheit nach Anspruch 1 oder 2, **dadurch gekennzeichnet, dass** der Initialzünder aus Paraffin besteht oder Paraffin enthält.

4. Holzscheit nach einem der Ansprüche 1 bis 3, **dadurch gekennzeichnet, dass** sich das äußerste Ende der Rillen (10) maximal in einem Abstand befindet, der der Höhe der Aushöhlung entspricht.

5. Holzscheit nach einem der Ansprüche 1 bis 4, **dadurch gekennzeichnet, dass** er bis zu 8 Rillen aufweist.

6. Holzscheit nach einem der Ansprüche 1 bis 5, **dadurch gekennzeichnet, dass** die maximale Breite der Baugruppe, bestehend aus dem Initialzünder und seiner Schutzhülle, kleiner ist, als die Mindestbreite der Aushöhlung.

7. Holzscheit nach einem der Ansprüche 1 bis 6, **dadurch gekennzeichnet, dass** der Initialzünder über eine Zündlunte (7) verfügt.

8. Holzscheit nach Anspruch 7, **dadurch gekennzeichnet, dass** sich das Ende der Zündlunte außerhalb des Initialzünders unter dem Niveau der oberen querliegenden Fläche (1) des Holzscheits oder annähernd auf diesem Niveau befindet.

9. Holzscheit nach Anspruch 7 oder 8, **dadurch gekennzeichnet, dass** die Breite der Zündlunte 10% bis 20% der Breite der Masse des Initialzünders entspricht.

10. Holzscheit nach einem der Ansprüche 1 bis 9, **dadurch gekennzeichnet, dass** die obere Fläche eine allgemein konkave Konfiguration aufweist.

11. Holzscheit nach einem der Ansprüche 1 bis 10, **dadurch gekennzeichnet, dass** das Mittel mit Kamineffekt Öffnungen beinhaltet, die sich unter dem Niveau der Verbrennung befinden.

12. Holzscheit nach Anspruch 11, **dadurch gekennzeichnet, dass** die Schutzhülle aus einem Blatt eines steifen oder nicht steifen Materials besteht.

13. Holzscheit nach Anspruch 12, **dadurch gekennzeichnet, dass** die Schutzhülle aus einem Blatt Papier besteht, dass ggf. paraffiniert ist, oder aus einem Blatt Pappe, das ggf. paraffiniert ist.

14. Holzscheit nach einem der Ansprüche 1 bis 13, **dadurch gekennzeichnet, dass** er über einen Henkel (11) verfügt, mit dem er sich ergreifen und transportieren lässt.

15. Holzscheit nach einem der Ansprüche 1 bis 14, **dadurch gekennzeichnet, dass** das Holz von Laub- oder Nadelbäumen stammt.

## Claims

1. A wooden fire torch for the production of heat and light, of the type comprising:
• an upper transverse face (1), a lower transverse face (2) and a lateral face (3),
• a recess (4) which extends from the upper transverse face in the direction of the lower transverse face but does not reach the latter, containing an initiator (5) for combustion of said fire torch, the height of said combustion initiator being less than or equal to the height of the recess, and
• a chimney effect means; in which the chimney effect means comprises grooves which extend from the upper transverse face in the direction of the lower transverse face below the combustion surface of the combustion initiator and from the lateral face to the recess; and
wherein the combustion initiator is completely or partially surrounded by a protective envelope which is constituted by a material which is not flame-proof and which is capable of preventing the flow, on the exterior of the fire torch, of the non-solid material constituting said initiator or of the non-solid material which issues from it following combustion.

2. The fire torch according to claim 1, wherein the combustion initiator is in the form of a solid, semi-solid or liquid mass.

3. The fire torch according to claim 1 or claim 2, wherein the combustion initiator is constituted by paraffin or comprises paraffin.

4. The fire torch according to one of claims 1 to 3, **characterised in that** the distal end (10) of the grooves is located at a maximum distance which is equivalent to the height of the recess.

5. The fire torch according to one of claims 1 to 4, wherein it comprises up to 8 grooves.

6. The fire torch according to one of claims 1 to 5, wherein the maximum width of the assembly formed by the combustion initiator and its protective envelope is less than the minimum width of the recess.

7. The fire torch according to one of claims 1 to 6, wherein the combustion initiator is provided with a wick (7).

8. The fire torch according to claim 7, wherein the end of the wick, on the exterior of the initiator, is located below the level of the upper transverse face (1) of the fire torch or substantially at said level.

9. The fire torch according to claim 7 or claim 8, wherein the width of the wick is equal to 10% to 20% of the width of the mass of the combustion initiator.

10. The fire torch according to one of claims 1 to 9, wherein the overall configuration of the upper face is concave.

11. The fire torch according to one of claims 1 to 10, wherein the chimney effect means comprises orifices located below the combustion level.

12. The fire torch according to claim 11, wherein the protective envelope is produced from a sheet of a rigid or non-rigid material.

13. The fire torch according to claim 12, wherein the protective envelope is constituted by a sheet of paper which may be waxed or by a sheet of card which may be waxed.

14. The fire torch according to one of claims 1 to 13, wherein it is provided with a handle (11) which allows it to be grasped and transported.

15. The fire torch according to one of claims 1 to 14, wherein the wood originates from hardwood or softwood trees.
